# EUROPEAN PATENT APPLICATION

(11) **EP 1 544 719 A2**
(43) Date of publication of application: **22.06.2005**
(21) Application number: 04257823.7
(22) Date of filing: 16.12.2004
(51) Int. Cl.: G06F 3/023

(54) **Information processing apparatus and input method**

(30) Priority: 16.12.2003 JP 2003418645
(71) Applicant: CANON KABUSHIKI KAISHA, Ohta-ku, Tokyo (JP)
(72) Inventor: Yamamoto, Hiroki, Ohta-ku Tokyo (JP); Komori, Yasuhiro, Ohta-ku Tokyo (JP)
(74) Representative: Beresford, Keith Denis Lewis

(57) **Abstract**

More comfortable data input is implemented by using speech recognition and a character prediction function in combination. For example, according to a data input method of this invention, character string candidates which follow a character string input by a character string input device are predicted (S402), and the predicted character string candidates are displayed on a display device (S403). Speech recognition is performed for speech input by the speech input device using the character string candidates displayed on the display device as words to be recognized (S411), and a character string serving as the recognition result is confirmed as a character string to be used (S412).

## Description

### FIELD OF THE INVENTION

The present invention relates to a data input technique which uses key/button operation and a speech recognition function in combination.

### BACKGROUND OF THE INVENTION

Data input is required to use many current information devices.

Data which is most frequently input in a daily-use information device is probably a character. Character input generally involves troublesome input operation such as keyboard operation or the like. In particular, character input in a compact portable terminal such as a cellular phone, PDA, or the like which has a limited number of keys and buttons requires a larger number of times of input operations involving key/button presses than that in a personal computer or the like with many keys.

To increase the efficiency in such troublesome character string input, there is implemented a character input method which has an input prediction function (also referred to as an AutoComplete function). This function predicts and presents a character string candidate which follows an input character string.

With the input prediction function, character string input can be complete by selecting a desired one (if any) from presented character string candidates. If the prediction performance is high, every character string can be input without inputting the entire character string. By presenting character strings having undergone kana-kanji conversion as candidates for each character string, kana-kanji conversion operation can also be omitted.

There are proposed many techniques that pertain to character string input prediction for supporting character input (e.g., see Japanese Patent Laid-Open Nos. 08-235318 and 08-255158 and "POBox (Predictive Operation Based On eXample)", URL: http://www.csl.sony.co.jp/person/masui/OpenPOBox/index. html).

Techniques for supporting character string input alternative to the above-mentioned input prediction include speech recognition. Since the use of speech recognition basically eliminates the need for key operation to input a character string, those unskilled in key operation can efficiently input a character string. Also, speech recognition is effective in inputting a character string in a device with a limited number of keys.

An input prediction technique is also implemented in a compact portable terminal such as a cellular phone, PDA, or the like which is recently becoming more sophisticated, and is very convenient. However, when a plurality of character strings are presented as candidates, an operation of selecting a desired one may become complicated. Particularly, to select a character string only by cursor movement operation and scroll operation, an operation of moving the position of a cursor needs to be repeated until the cursor reaches the desired character string. When many candidates are presented, the number of times of operations increases.

Speech recognition techniques have recently improved in performance. A dictation software program which handles several ten thousand words allows comfortable character string input on a high-performance computer in a relatively quiet environment such as an office. However, since speech recognition which handles several ten thousand words requires many computer resources (CPU and memory), comfortable operation cannot be expected even in an existing compact portable terminal whose performance has been enhanced. Additionally, an existing dictation software program does not offer satisfactory recognition performance in a place where background noise is loud and thus cannot offer its real performance outdoors where a compact portable terminal is often used.

In consideration of the use environment and resources of a PDA, it is the best way to minimize the number of recognizable words in order to implement a response speed which does not apply any stress to the user. However, a mere reduction in the number of words lowers the recognition rate and disables inputting of a desired character string without correcting operation. It is rather difficult to comfortably input a character string in a compact portable terminal using only speech recognition by a currently used technique.

As another problem, homophones cannot be distinguished from each other using only speech. More specifically, whether either of "son" and "sun" (both of which have the same pronunciation) can be adopted as the notation for speech input /sΛ̇n/ cannot be determined from the speech input.

### SUMMARY OF THE INVENTION

The present invention has as an aim implement comfortable data input using a character string prediction function and speech recognition in combination.

An information processing apparatus according to one embodiment of the present invention addresses the above-mentioned problems by having the following arrangement. That is, the information processing apparatus comprises prediction means for predicting at least one character candidate which follows at least one input character, display control means for controlling displaying the at least one character candidate predicted by the prediction means, speech recognition means for performing speech recognition for input speech using the at least one displayed character candidate as a word to be recognized, and confirmation means for confirming the recognition result from the speech recognition means.

According to another embodiment of the present invention, there is provided a data input method in an information apparatus, comprising a prediction step of predicting at least one character candidate which follows at least one character input by a character input device, a display control step of displaying the at least one character candidate predicted in the prediction step on a display device, a speech recognition step of performing speech recognition for speech input by a speech input device using the at least one character candidate displayed on the display device as a word to be recognized, and a confirmation processing step of confirming, as at least one character to be used, at least one character serving as a recognition result obtained in the speech recognition step.

Other and further objects, features and advantages of the present invention will be apparent from the following descriptions taken in conjunction with the accompanying drawings, in which like reference characters designate the same or similar parts throughout the figures thereof.

### BRIEF DESCRIPTION OF THE DRAWINGS

The accompanying drawings, which are incorporated in and constitute a part of the specification, illustrate embodiments of the invention and, together with the descriptions, serve to explain the principle of the invention.
Fig. 1 is a block diagram showing the arrangement of a cellular phone set according to an embodiment;
Fig. 2 is a block diagram showing the functional arrangement of a process that pertains to character input in the cellular phone set according to the embodiment;
Fig. 3 is a view showing an example of the layout of buttons of an input device according to the embodiment;
Fig. 4 is a flowchart showing the flow of a character string input process according to the embodiment;
Fig. 5 is a chart showing the transition of the display contents of a display device during the character input process;
Fig. 6 is a flowchart showing the flow of a process performed to confirm a character string after checking a recognition result;
Fig. 7 is a chart for explaining a process performed when speech recognition in character string selection causes a recognition error;
Fig. 8 is a flowchart showing the flow of a process of presenting character string candidates according to the third embodiment; and
Fig. 9 is a chart for explaining an example of presentation of character string candidates according to the third embodiment.

### DETAILED DESCRIPTION OF THE PREFERRED EMBODIMENTS

Preferred embodiments of the present invention will now be described in detail in accordance with the accompanying drawings.

### (First Embodiment)

An example will be described below wherein a data input apparatus according to the present invention is applied to a cellular phone set. The present invention, however, is not limited to a cellular phone set and can be applied to any information processing apparatus that requires character input from the user, including a portable terminal such as a PDA, personal computer, and the like.

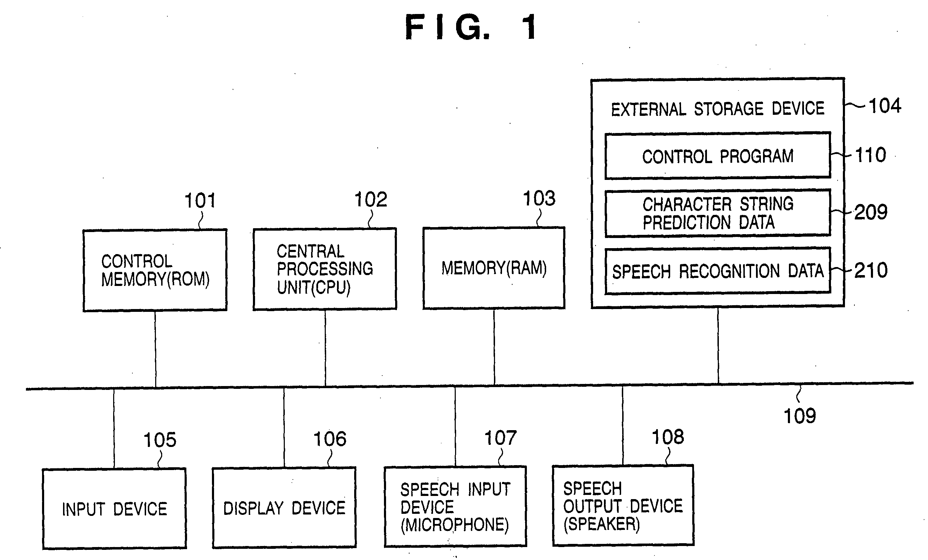

Fig. 1 is a block diagram showing the arrangement of a cellular phone set according to the first embodiment.

Referring to Fig. 1, reference numeral 101 denotes a control memory (ROM); 102, a central processing unit (CPU); 103, a memory (RAM); 104, an external storage device; 105, an input device comprising a key, button, and the like; 106, a display device such as a liquid crystal monitor; 107, a speech input device (microphone); 108, a speech output device (speaker); and 109, a bus. As shown in Fig. 1, the external storage device 104 stores a control program 110 for implementing the cellular phone set according to this embodiment, character string prediction data 209 for character string prediction, speech recognition data 210 including acoustic models required to perform speech recognition, and the like. The character string prediction data 209 is formed using a kana-kanji conversion dictionary, the character input history of the user, and the like. The control program 110 and data 209 and 210 are loaded in the RAM 103 through the bus 109 under the control of the CPU 102 and are executed by the CPU 102. They may be stored in the ROM 101 instead of the external storage device 104.

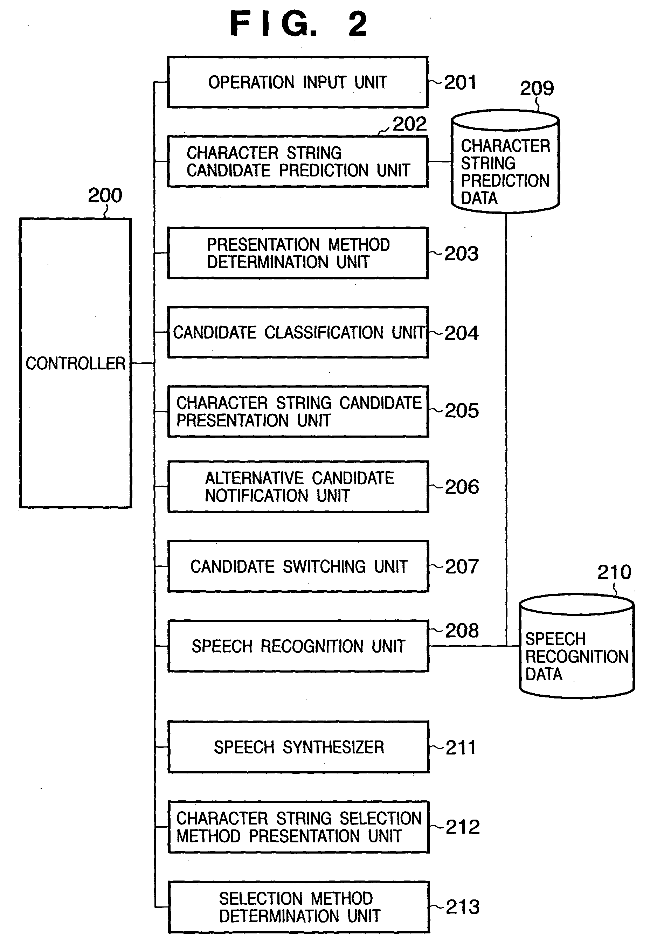

Fig. 2 is a block diagram showing the functional arrangement of a process that pertains to character input in the cellular phone set according to the embodiment.

An operation input unit 201 detects operation with a button or the like, including character input, which is performed by the user using the input device 105.

A character string candidate prediction unit 202 predicts character string candidates which follow a character string input by the user while referring to the character string prediction data 209.

A presentation method determination unit 203 determines a method of presenting the predicted character string candidates.

A candidate classification unit 204 classifies the predicted character string candidates into a plurality of groups in accordance with the determined presentation method.

A character string candidate presentation unit 205 displays character string candidates on the display device 106 in accordance with the determined presentation method.

An alternative candidate notification unit 206 notifies the user that there are more candidates other than the presented ones when candidates are classified into a plurality of groups and are presented by group.

A candidate switching unit 207 detects the user's operation of switching character string candidates to be presented from one group to another and switches the candidates to be presented when candidates are classified into a plurality of groups and are displayed for each group.

A speech recognition unit 208 performs speech recognition which handles character string candidates presented by the character string candidate presentation unit 205 as words to be recognized. The pronunciation of each word to be recognized is determined with reference to the character string prediction data 209.

A speech synthesizer 211 generates a synthetic sound to present data or give various kinds of notifications to the user by voice.

A character string selection method presentation unit 212 presents the user a method of selecting a desired one from presented character string candidates.

A selection method determination unit 213 detects the user's operation of selecting the character string selection method and determines the character string selection method.

A controller 200 controls the above-mentioned modules and controls the entire process that pertains to character input.

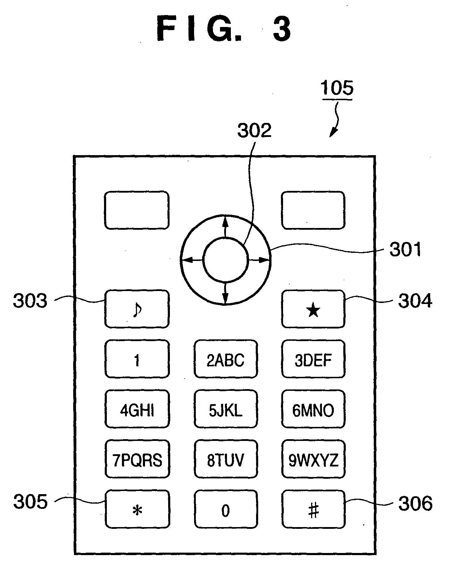

Fig. 3 is a view showing an example of the layout of buttons of the input device 105.

Reference numerals 301 and 302 denote concentrically arranged buttons. The button 301 serving as the outer ring is mainly used to designate the moving direction of a cursor (up, down, left, and right). The button 301 will be denoted by symbols "↑", "↓", "←", and "→" hereinafter. The inner ring central button 302 is mainly used to confirm a selected candidate in character string selection. The button 302 will be denoted by a symbol "•" hereinafter. Reference numerals 303 to 306 denote buttons. The function of each button changes in accordance with the state transition of the process in character string processing. The buttons 303 to 306 will be denoted by symbols " 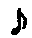 ", " 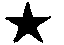 ", "∗", and "#", respectively.

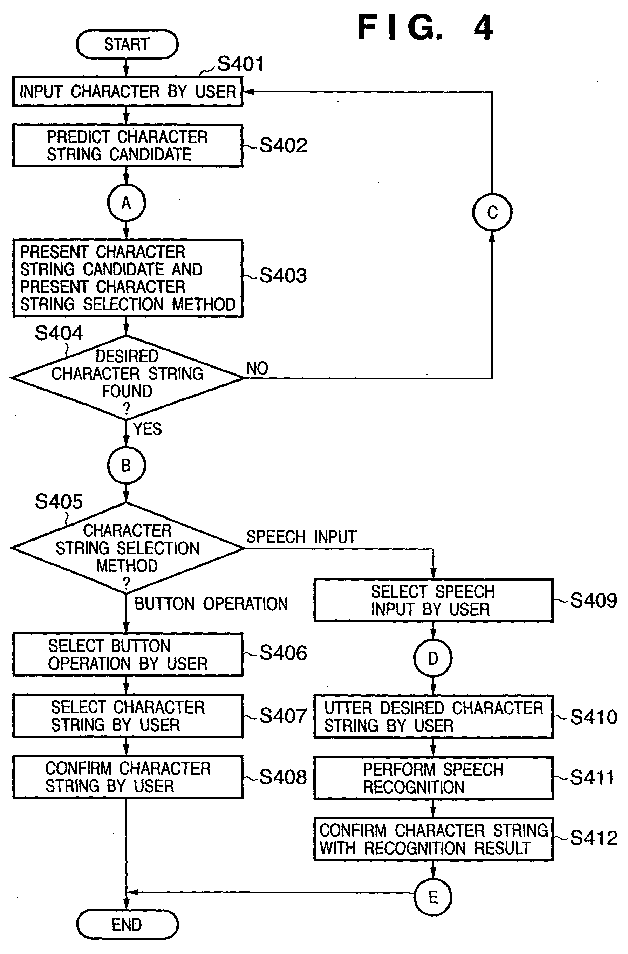

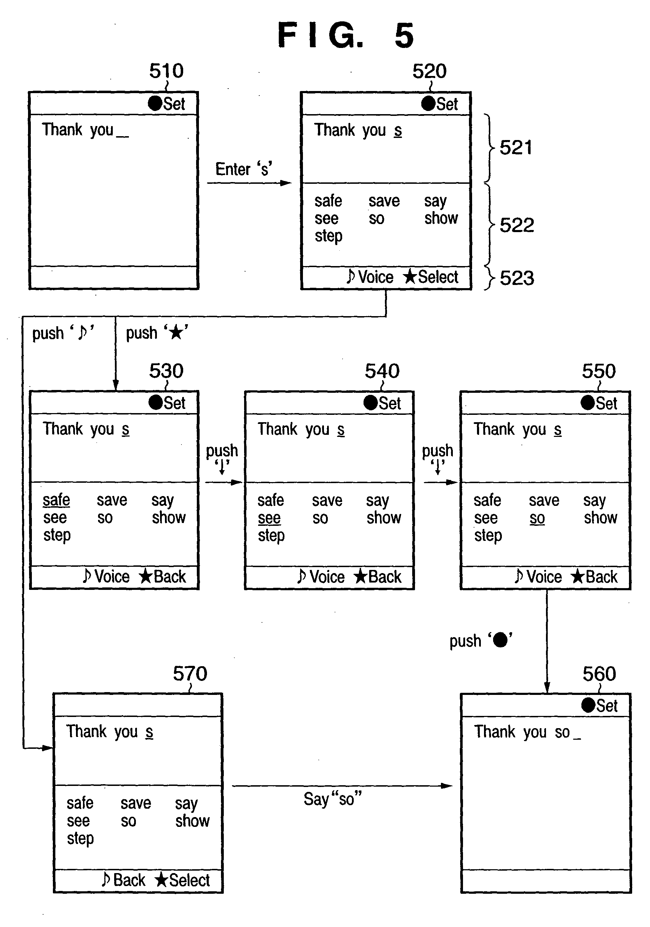

A character string input process according to the embodiment will be described with reference to Figs. 4 and 5. Fig. 4 is a flowchart showing the flow of the character string input process according to the embodiment; and Fig. 5, a chart showing the transition of the display contents of the display device 106 during the character string input process. Since known techniques can be used to perform character string candidate prediction and speech recognition, a detailed description thereof will be omitted.

A case will be described wherein the user inputs a character string "Thank you so much." Assume that the user has already input a character string "Thank you " and is about to input a subsequent character string "so".

After the character string "Thank you" is input, the display contents of the display device 106 are as denoted by reference numeral 510 of Fig. 5.

The user inputs the first character "s" to input the character string "so" (step S401). When the operation input unit 201 detects that the character "s" is input, the character string candidate prediction unit 202 refers to the character string prediction data 209 and predicts character string candidates which follow the character "s" (step S402). As described above, the character string prediction data 209 is formed using the character input history of the user, a kana-kanji conversion dictionary which indicates the correspondence between hiragana characters and kanji characters, and the like. Since a plurality of characters are generally assigned to one button in a cellular phone, character strings beginning with a character "p", "q", "r", or "s" may be predicted as character string candidates when a button "PQRS" is pressed once.

Predicted character string candidates are presented on the display device 106 by the character string candidate presentation unit 205 (step S403). At this time, the presentation method determination unit 203 may define a character string presentation order. For example, if the character input history of the user is used as the character string prediction data 209, character strings may be displayed in order of decreasing frequency or in reverse chronological order (a character string input latest first). If the number of the predicted character string candidates is large, the presentation order may be determined using any of the above-mentioned criteria, and only a predetermined number of character string candidates may be displayed. As another method, the number of character string candidates which can be displayed at a time may be calculated from the size of a screen area for character string candidate presentation, and only the calculated number of character string candidates may be displayed. In step S403, the character string selection method presentation unit 212 may present a character string selection method, simultaneously with the presentation of the character string candidate selection method.

Assume that character strings "safe", "save", "say", "see", "so", "show", and "step" are predicted as character string candidates in step S402 in response to the input of the character "s". This embodiment will also describe a case wherein character string selection by speech recognition and character string selection by button operation are used in combination.

Reference numeral 520 in Fig. 5 shows how predicted character string candidates are presented. In this example, a window is split in two, and a character string being input is displayed in a character input window 521 while character string candidates are displayed in a character string selection window 522. An operation button guide 523 for designating the character string selection method by the character string selection method presentation unit 212 is displayed together with the display of the character string candidates. To indicate that the current object to be operated is the window where character input is performed, the character input window is highlighted by, e.g., changing the background color. The presentation method determination unit 203 controls presentation of character string candidates and additional display of the operation button guide.

If one desired by the user is not among the presented character string candidates in step S404, the flow returns to step S401 to prompt the user to further input a character string. On the other hand, if the desired one is among them, the flow advances to step S405.

In step S405, the user shifts to an operation of selecting the desired character string. If the user selects to use speech recognition, the flow advances to step S409. On the other hand, if the user selects to use button operation, the flow advances to step S406.

A case will be described first wherein selection is performed by button operation. The user operates to select character string selection by button operation (step S406). The selection method determination unit 213 detects the operation, and subsequent character string selection is performed by button operation. In this embodiment, button operation is selected by pressing the button " 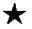 " denoted by reference numeral 304 in Fig. 3. Reference numeral 530 in Fig. 5 shows the display contents when button selection is selected. In the display contents 530, to indicate that the object to be operated shifts to the window where the character string candidates are displayed, an area to be highlighted shifts from the character input window to the character string selection window, and a cursor is displayed at the position of the first character string candidate "safe". At this time, the function of the button " 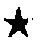 " is changed to "Back (the object to be operated shifts to the character input window)".

The user selects the desired character string by button operation (step S408). Referring to Fig. 5, to select the target character string "so", the user presses the portions "↓" and "→" of the button 301 and moves the cursor position to the character string "so". Reference numerals 540 and 550 denote the screen transition during this operation.

In step S408, the user operates to confirm a character string to be used. When the user presses the button "•" denoted by reference numeral 302 while the display contents 550 are displayed, the character string "so" being selected is confirmed as the character string to be used. Reference numeral 560 denotes the screen after the character string "so" is confirmed. The case has been described wherein one is selected from predicted character string candidates by button operation.

A case will be described next wherein the user selects to use speech recognition in step S405. The user operates to select character string selection by speech recognition (step S409). The selection method determination unit 213 detects the operation, and subsequent character string selection is performed by speech recognition.

In this embodiment, speech recognition is selected by pressing the button " 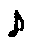 " denoted by reference numeral 303. When the user presses the button " 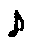 " while the display contents 520 in Fig. 5 are displayed, the area to be highlighted shifts from the character input window to the character selection window. Note that since character selection is not performed by cursor movement in the case of speech recognition, no cursor is displayed on the character string selection window. The user utters a desired character string "so" (step S410). The speech recognition unit 208 performs speech recognition for the utterance of the user (step S411) and confirms, as a character string to be used, the resultant character string serving as the recognition result (step S412). The speech recognition in step S412 handles only characters presented by the character string candidate presentation unit 205 as words to be recognized. The speech recognition unit 208 determines the pronunciation of each word to be recognized with reference to the character string prediction data 209. The screen transition when a character string is selected by speech recognition is represented by the transition from display contents 570 in Fig. 5 to the display contents 560.

As described above, according to this embodiment, character string candidates which follow a character input using the input device 105 are displayed, and a character string to be used can be selected from the character sting candidates by speech recognition. This makes it possible to greatly reduce troublesome button operation. Since the speech recognition in this embodiment handles only displayed character string candidates as words to be recognized, its computational quantity becomes small. Therefore, even if such speech recognition is implemented by, e.g., a compact portable terminal, the portable terminal can operate at sufficiently high speed while keeping high recognition rate.

### (Second Embodiment)

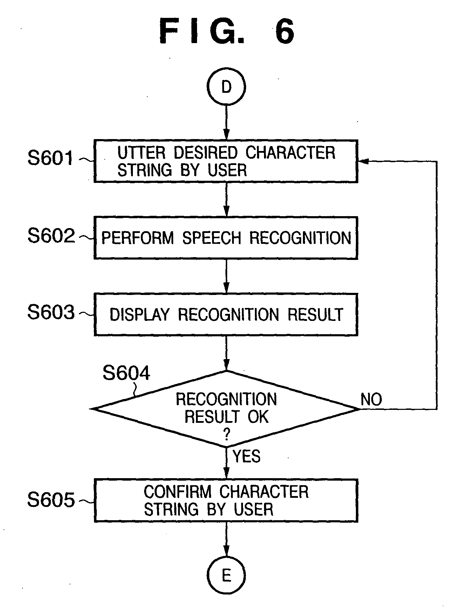

In the first embodiment, a character string to be used is confirmed in step S412 without the user checking the result of speech recognition in step S411. In this case, if utterance is miss-recognized as a character string different from a desired one, the wrong character string is confirmed as the character string to be used. To avoid this, a step of checking a recognition result is necessary. Under the circumstances, this embodiment will describe an example with reference to Fig. 6 wherein a character string to be used is confirmed after checking a recognition result.

Fig. 6 is a flowchart showing the flow of a process performed to confirm the character string to be used after checking a recognition result. Fig. 6 shows only processing blocks alternative to steps S410 to S412 between D and E in the flowchart of Fig. 4. The contents of the remaining processing blocks are the same as those in the first embodiment, and a description thereof will be omitted. Only the processes between D and E, which are different from those in Fig. 4, will be described.

As described in the first embodiment, when the user utters a desired character string "so" (step S601), the speech recognition unit 208 performs speech recognition for the utterance (step S602) and presents the recognition result (step S603). From this presentation, the user can determine whether the result is correct (step S604). If the recognition result is incorrect, the flow returns to step S601. In step S601, the user utters the desired character string "so" again (step S601). The processes in steps S601 to S604 are repeated until a correct recognition result is obtained. If a correct recognition result is obtained in step S604, the user operates to confirm a character string to be used. The user confirms the obtained recognition result as the character string (step S605).

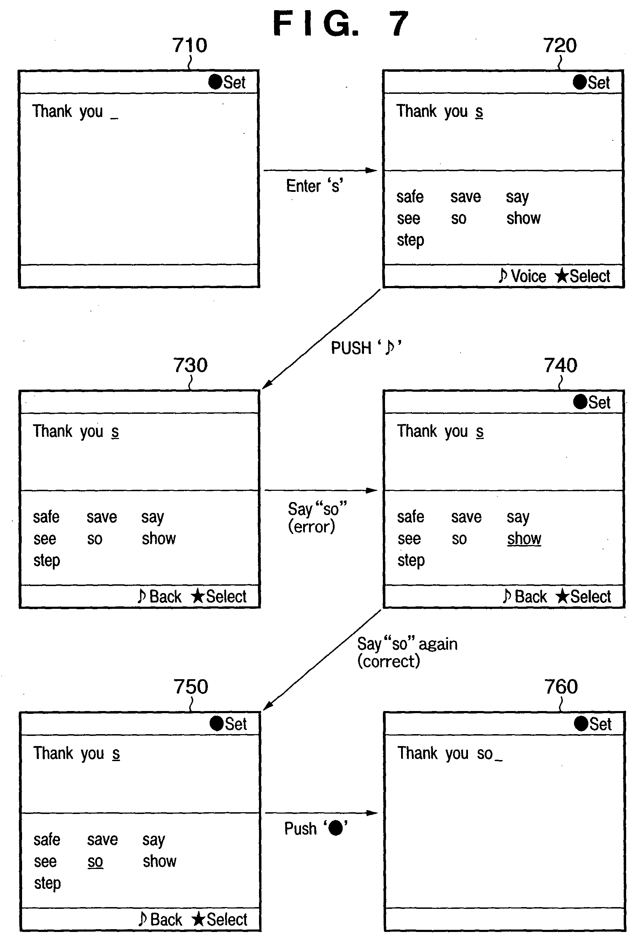

Fig. 7 shows the screen display transition according to this embodiment.

Fig. 7 shows a case wherein speech recognition for character string selection causes a recognition error in inputting a character string "so" of a character string "Thank you so much." in the same manner as in the first embodiment.

Reference numeral 710 shows a state wherein a character string "Thank you " is confirmed. When the user inputs a character "s", character string candidates predicted from the character "s" are presented in the same manner as in the first embodiment (720). To use speech recognition for character string selection, the user presses a button " 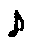 ", and speech recognition starts (730). Reference numeral 740 denotes a display in step S603 when an utterance "so" of the user is miss-recognized as a character string "show". In this display example, the recognition result is presented by moving a cursor to a character string corresponding to the recognition result out of presented character string candidates (the character string is underlined). A recognition result presentation method is not limited to this. For example, the recognition result may be presented by highlighting the character string corresponding to the recognition result. Since the presented recognition result "show" is not the target one ("so"), the user utters the character string "so" again (NO in step S604 and then step S601). Reference numeral 750 denotes a state wherein the second utterance is correctly recognized, and the character string "so" is presented as the recognition result (steps S602 and S603). Since the recognition result is correct, the user presses a button "•" and confirms the character string (step YES in step S604 and then step S605). When the character string is confirmed, a displayed window where predicted character string candidates are displayed disappears, and the window returns to a character input window (760), as described in the first embodiment.

As described above, according to this embodiment, if speech recognition for character string selection causes a recognition error, the user can utter any number of times until a correct recognition result is obtained. This makes it possible to easily correct a recognition error.

### (Third Embodiment)

In the above-mentioned embodiments, all predicted character string candidates are presented or a predetermined number of ones out of many character string candidates are presented. The embodiments do not take into consideration presentation when predicted character string candidates include a plurality of character string candidates whose pronunciations are the same. This embodiment will describe character string candidate presentation considering this case.

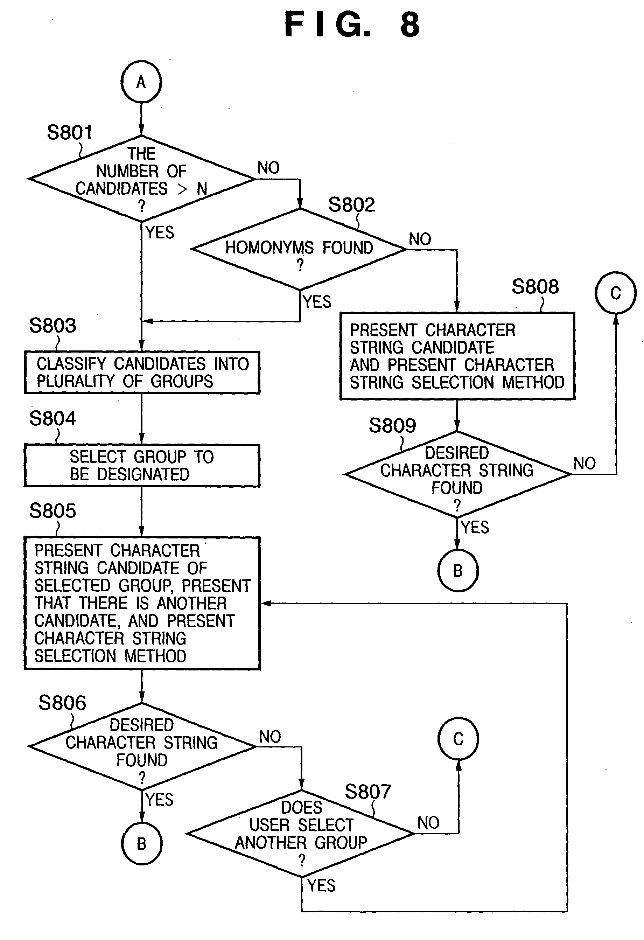

This embodiment is characterized in that character string candidates are classified into a plurality of groups, and the candidates are presented over a plurality of times, if the number of the predicted character string candidates is large or if the character string candidates include character string candidates whose pronunciations are the same. The processing will be described in detail with reference to Fig. 8.

Fig. 8 is a flowchart showing the flow of a process of presenting character string candidates according to this embodiment. The flowchart shows a part of Fig. 4. Only processing blocks alternative to steps S403 and S404 between A and B in the flowchart of Fig. 4. The contents of the remaining processing blocks are the same as those in the first embodiment, and a description thereof will be omitted. Only the processes between A and B, which are different from those in Fig. 4, will be described. Note that this embodiment can be combined with the processing described in the second embodiment.

In step S801, it is determined whether the number of character string candidates predicted in step S402 of Fig. 4 is larger than a predetermined number N. If the number of the character string candidates is larger than N, the process in step S803 and subsequent processes are performed to present the character string candidates over a plurality of times. The number N is the number of candidates to be presented at a time. The number N may be determined in advance. Alternatively, the number of candidates which can be presented at a time may be calculated from the number of characters of the predicted character string candidates and the size of a display area for presentation every character string prediction.

If the number of candidates is equal to or smaller than N, the flow advances to step S802. It is determined in step S802 whether the candidates include homophones. For example, if the character string candidates include ones whose pronunciations are the same such as character strings "stake" and "steak", a character string cannot be selected uniquely by speech recognition. Accordingly, a process of presenting character string candidates over a plurality of times is performed in step S803 and subsequent steps. A presentation method determination unit 203 performs the determination of a character string candidate presentation method. If the number of character string candidates is equal to or smaller than N, and the character string candidates do not include ones whose pronunciations are the same, the flow advances to steps S808 and S809. These steps are the same as steps S403 and S404, respectively, in Fig. 4, and a description thereof will be omitted. The determination processes in steps S801 and S802 are performed by the presentation method determination unit 203.

In step S808, a candidate classification unit 204 classifies the character string candidates into a plurality of groups. In classification, for example, the character string candidates may be extracted by N in order of decreasing frequency at a time. Alternatively, the character string candidates may be arranged in alphabetical order and be extracted by N at a time to form a group. Note that the classification must be performed such that a single group does not include character string candidates whose pronunciations are the same. As another method, a classification criterion which increases the degree of acoustic separation of character string candidates in each group from each other is preferably employed in order to increase the precision of speech recognition to be performed in subsequent processing.

In step S804, a group to be presented to the user is selected. At this time, one with the highest frequency is selected in the case of classification in order of decreasing frequency. In the case of classification in alphabetical order, the first group in alphabetical order is similarly selected. If degree of acoustic separation is used as a criterion, a group with the highest degree of acoustic separation is selected.

The flow advances to step S805. In step S805, a character string candidate presentation unit 205 presents character string candidates of the selected group on a display device 106, and an alternative candidate notification unit 206 notifies the user that there are more character string candidates other than the presented character string candidates. A character string selection method presentation unit 212 presents character string selection methods, as described in the first embodiment.

The user determines in step S806 whether the presented character string candidates include a desired character string. If the presented character string candidates include the desired one, the flow advances to step S405 in Fig. 4 to perform an operation of selecting the desired character string from the presented character string candidates in the same manner as in the first embodiment. On the other hand, if the presented character string candidates do not include the desired one, the flow advances to step S807. In step S807, the user selects another group or the user returns to step S401 to input the next character. If the user selects another group, a candidate switching unit 207 detects group selection operation of the user and switches candidates to be presented to ones of the group selected by the user. The flow returns to step S805 to repeat the same procedure.

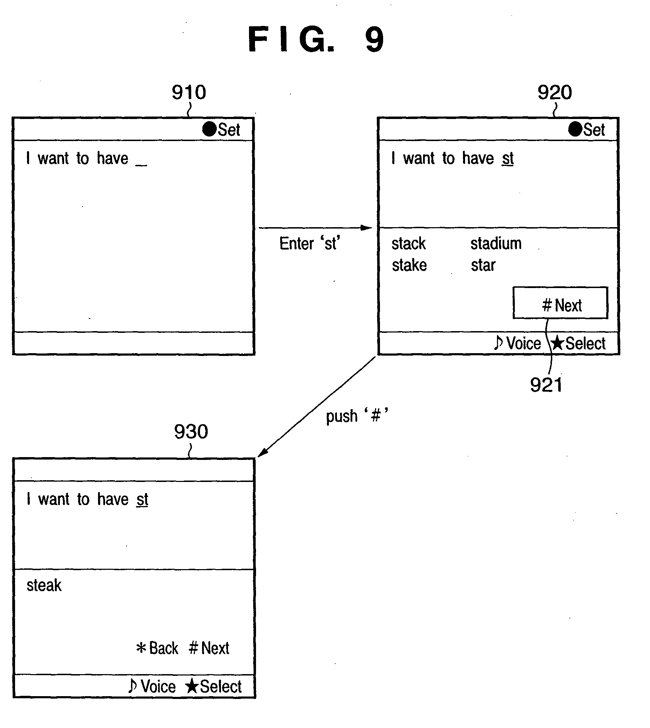

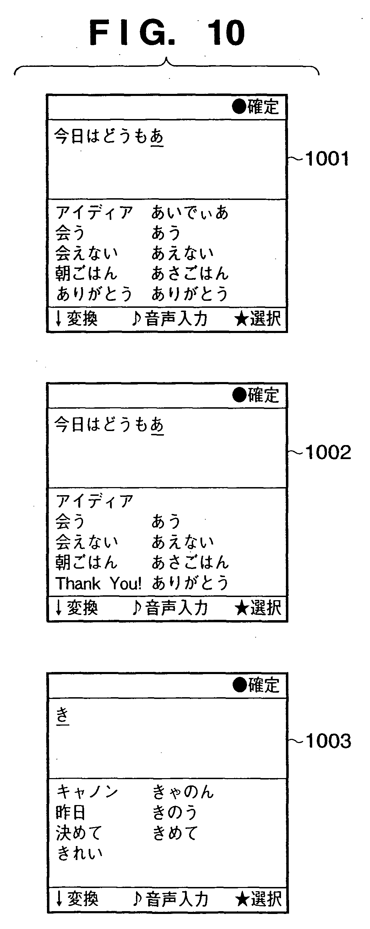

Fig. 9 shows based on the procedure described in this embodiment an example of presentation and how candidates to be presented are switched when predicted character string candidates include ones whose pronunciations are the same.

Fig. 9 shows an example of character string candidate presentation when the user wants to input a character string "I want to have steak" and inputs a character string "st" to input a character string "steak" after a character string "I want to have ". Assume that the number N of character string candidates to be presented at a time is set to 8.

Reference numeral 910 denotes how the character string "I want to have " is confirmed. Assume that five character string candidates "stack", "stadium", "stake", "star", and "steak" are obtained from the character string "st" input by the user (steps S401 and S402). Since N = 8, the flow shifts to step S802. Since the predicted character string candidates include two character string candidates "stake" and "steak" whose pronunciations are the same (step S802), the character string candidates are classified into two groups (a group of "stack", "stadium", "stake", and "star" and a group of "steak") in alphabetical order such that the character strings "stake" and "steak" belong to different groups (step S803).

The group of "stack", "stadium", "stake", and "star", which is the first in alphabetical order, is selected as a group to be presented (step S804), and the selected character string candidates are presented to the user (step S805). At the same time, the alternative candidate notification unit 206 notifies the user that there are more candidates other than the presented character string candidates (step S805). Reference numeral 920 denotes the state. A guide "# Next Candidates" denoted by reference numeral 921 is an example of notification by the alternative candidate notification unit 206.

Since the desired character string "steak" is not presented at this time, the user presses a button "#" and selects to display other candidates to view them (step S806). The candidate switching unit 207 detects candidate switching operation by the user and selects the next candidate(s) ("steak") selected by the user, i.e., the next group as the group to be presented (step S804). Reference numeral 930 denotes an example wherein the character string "steak" is presented to the user. Since there are the character string candidates of the first presented group other than the character string "steak" being presented, a guide "* Previous Candidates" denoted by reference numeral 922 is displayed in addition to the guide "# Next Candidates" denoted by reference numeral 921. These guides indicate that there are more character string candidates (step S805). A process of selecting a character string from presented character string candidates and confirming the character string is performed in accordance with the procedure described in the first or second embodiment.

As described above, according to this embodiment, if predicted character string candidates include homophones, the character string candidates are classified into groups such that the homophones belong to different groups, and one group is displayed at a time. This makes it possible to uniquely define a recognition result for each group and omit selection operation by the user.

In this embodiment, if predicted character string candidates include a plurality of identical character string candidates whose pronunciations are different from each other such as character strings "read" (/ri:d/) and "read" (/red/) in presenting predicted character string candidates, the presentation method determination unit 203 may select and present one of them. Assume that the character string candidates include character strings "read" (/ri:d/), "read" (/red/), and "red" (/red/). In this case, the character strings "read" (/red/), and "red" (/red/) have the same pronunciation (these words are acoustically the same, and thus the degree of acoustic separation is 0), and the character string "read" (/ri:d/) is selected from the character strings "read" (/red/) and "read" (/ri:d/). The character strings "read" (/ri:d/) and "red" (/red/) are presented as character string candidates.

With this process, selection operation by the user can be omitted.

### (Other Embodiment)

In the above-mentioned embodiments, only character strings are presented in presenting predicted character string candidates. The present invention is not limited to this. If each character string has a pronunciation as in, e.g., Japanese, the pronunciation of each character string candidate may be presented together with the character string candidate. Also, the pronunciation of each character string candidate may be presented only when the character string candidate includes charactersother than kana characters. Additionally, the pronunciation of each character string including only kana characters candidate may be presented when the notation is different from the pronunciation. Moveover, character string candidates and their equivalents in another language may be presented together.

In one example the pronunciations of all character string candidates are presented. In another example only the pronunciations of character string candidates each of which includes a character other than hiragana and katakana characters are presented. For example, since a character string " 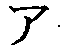 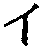 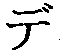 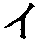 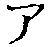 " consists of katakana characters, the pronunciation of the character string is not presented. There is an exception to this rule. In another example the pronunciations of character string candidates each consisting of only hiragana and katakana characters is presented when the notation of each character sting candidate is different from the pronunciation. For example, although a character string " 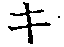 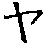 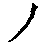 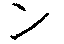 " consists of only katakana characters, the pronunciation of the character string is presented because the pronunciation is "/kyanon/".

The above-mentioned embodiments have described a case wherein presentation of character string candidates, presentation of a recognition result, and a notification that there are other candidates are displayed on a display device 106. The present invention is not limited to this. A speech synthesizer 211 may synthesize speech, and a speech output device 108 may present the synthesized speech by voice.

The above-mentioned embodiments have described character string input as one embodiment. The present invention is not limited to this. The present invention can be practiced in an apparatus which inputs data in other forms (e.g., a case wherein image data is input with a name given to the image).

As described above, a data input apparatus according to the present invention uses speech recognition and prediction of data which can be input in combination and selects desired data from predicted data candidates by speech recognition. This allows more efficient data input than data input using only data prediction or speech recognition.

If predicted data candidates include a plurality of data whose pronunciations are the same, these data are classified into a plurality of groups and are presented by group such that data candidates to be presented at a time do not include data whose pronunciations are the same. This makes it possible to uniquely select desired data by speech recognition and increases the convenience when speech recognition is used for data input.

The above-mentioned embodiments have described an example wherein only displayed character string candidates are handled as words to be recognized. The present invention is not limited to this. A character string which is not displayed among predicted character string candidates may be handled as words to be recognized.

Note that the present invention can be applied to an apparatus comprising a single device or to system constituted by a plurality of devices.

Furthermore, the invention can be implemented by supplying a software program, which implements the functions of the foregoing embodiments, directly or indirectly to a system or apparatus, reading the supplied program code with a computer of the system or apparatus, and then executing the program code. In this case, so long as the system or apparatus has the functions of the program, the mode of implementation need not rely upon a program.

Accordingly, since the functions of the present invention are implemented by computer, the program code installed in the computer also implements the present invention. In other words, the claims of the present invention also cover a computer program for the purpose of implementing the functions of the present invention.

In this case, so long as the system or apparatus has the functions of the program, the program may be executed in any form, such as an object code, a program executed by an interpreter, or scrip data supplied to an operating system.

Example of storage media that can be used for supplying the program are a floppy disk, a hard disk, an optical disk, a magneto-optical disk, a CD-ROM, a CD-R, a CD-RW, a magnetic tape, a non-volatile type memory card, a ROM, and a DVD (DVD-ROM and a DVD-R).

As for the method of supplying the program, a client computer can be connected to a website on the Internet using a browser of the client computer, and the computer program of the present invention or an automatically-installable compressed file of the program can be downloaded to a recording medium such as a hard disk. Further, the program of the present invention can be supplied by dividing the program code constituting the program into a plurality of files and downloading the files from different websites. In other words, a WWW (World Wide Web) server that downloads, to multiple users, the program files that implement the functions of the present invention by computer is also covered by the claims of the present invention.

It is also possible to encrypt and store the program of the present invention on a storage medium such as a CD-ROM, distribute the storage medium to users, allow users who meet certain requirements to download decryption key information from a website via the Internet, and allow these users to decrypt the encrypted program by using the key information, whereby the program is installed in the user computer.

Besides the cases where the aforementioned functions according to the embodiments are implemented by executing the read program by computer, an operating system or the like running on the computer may perform all or a part of the actual processing so that the functions of the foregoing embodiments can be implemented by this processing.

Furthermore, after the program read from the storage medium is written to a function expansion board inserted into the computer or to a memory provided in a function expansion unit connected to the computer, a CPU or the like mounted on the function expansion board or function expansion unit performs all or a part of the actual processing so that the functions of the foregoing embodiments can be implemented by this processing.

As many apparently widely different embodiments of the present invention can be made without departing from the spirit and scope thereof, it is to be understood that the invention is not limited to the specific embodiments thereof except as defined in the appended claims.

## Claims

1. An information processing apparatus comprising:
prediction means for predicting at least one character candidate which follows at least one input character;
display control means for controlling displaying said at least one character candidate predicted by said prediction means;
speech recognition means for performing speech recognition for input speech using said at least one displayed character candidate as a word to be recognized; and
confirmation means for confirming, as at least one character to be used, at least one character serving as a recognition result obtained by the speech recognition means.

2. The apparatus according to claim 1, further comprising
control means for controlling said display control means and speech recognition means to highlight said at least one character serving as the recognition result obtained by the speech recognition means out of said at least one character candidate displayed by said display control means in order to make a user confirm whether the recognition result is correct and perform speech recognition in this state for utterance given again,
wherein said confirmation means confirms, as said at least one character to be used, a recognition result at a time when it is detected that a predetermined button is pressed, under a control of said control means.

3. The apparatus according to claim 1, further comprising
classification means for, if said at least one character candidate predicted by said prediction means includes homophones, classifying said at least one character candidate into a plurality of groups such that the homophones belong to different groups,
wherein said display control means controls displaying said at least one character candidate by the group formed by said classification means.

4. The apparatus according to claim 1, wherein said speech recognition means determines a pronunciation of a word to be recognized on the basis of character prediction data used by said prediction means.

5. A data input method in an information processing apparatus, comprising:
a prediction step of predicting at least one character candidate which follows at least one character input by a character input device;
a display control step of controlling displaying said at least one character candidate predicted in the prediction step on a display device;
a speech recognition step of performing speech recognition for speech input by a speech input device using said at least one character candidate displayed on the display device as a word to be recognized; and
a confirmation step of confirming, as at least one character to be used, at least one character serving as a recognition result obtained in the speech recognition step.

6. The method according to claim 5, further comprising
a control step of controlling processes in the display control step and speech recognition step to highlight said at least one character serving as the recognition result obtained in the speech recognition step out of said at least one character candidate displayed on the display device to make a user confirm whether the recognition result is correct and perform speech recognition in this state for utterance given again by the speech input device,
wherein in the confirmation step, a recognition result at a time when it is detected that a predetermined button of the character input device is pressed is confirmed as said at least one character to be used, under a control in the control step.

7. The method according to claim 5, further comprising
a classification step of, if said at least one character candidate predicted in the prediction step includes homophones, classifying said at least one character candidate into a plurality of groups such that the homophones belong to different groups,
wherein in the display control step, said at least one character candidate is displayed on the display device by the group formed in the classification step.

8. The method according to claim 5, wherein in the speech recognition step, a pronunciation of a word to be recognized is determined on the basis of character prediction data used in the prediction step.

9. A program executed by a computer, comprising codes of:
a prediction step of predicting at least one character candidate which follows at least one character input by a character input device;
a display control step of controlling displaying said at least one character candidate predicted in the prediction step on a display device;
a speech recognition step of performing speech recognition for speech input by a speech input device using said at least one character candidate displayed on the display device as a word to be recognized; and
a confirmation step of confirming, as at least one character to be used, at least one character serving as a recognition result obtained in the speech recognition step.

10. A computer-readable storage medium which stores a program defined in claim 9.

11. An information processing apparatus comprising:
a plurality of keys for the input of symbols, wherein each of at least some of the keys is operable for the input of a plurality of different symbols;
a predictive text generator responsive to actuation of the keys to predict symbols intended by the user;
a display control means for controlling display of said predicted symbol;
speech recognition means for performing speech recognition on an input speech signal using said at least one predicted symbol to generate a recognised symbol; and
when said display controller is operable to control the display in dependence upon the recognised symbol.

12. A portable cellular communication device comprising:
a plurality of keys for the input of symbols, wherein each of at least some of the keys is operable for the input of a plurality of different symbols;
a keyboard processor operable to generate text data in dependence upon the actuation of one or more of said keys by a user;
an automatic speech recogniser operable to recognise an input speech signal and to generate a recognition result; and
a controller responsive to the text data generated by said keyboard processor and responsive to said recognition result generated by said automatic speech recogniser to generate text.
